# DEMANDE DE BREVET EUROPEEN

(11) **EP 2 538 296 A1**
(43) Date de publication de la demande: **26.12.2012**
(21) Numéro de dépôt: 11170782.4
(22) Date de dépôt: 21.06.2011
(51) Int. Cl.: G05B 19/416

(54) **Accélération réelle d'une machine-outil**

(71) Demandeur: Tornos SA, 2740 Moutier (CH)
(72) Inventeur: Currat, Jacques, 2740 Moutier (CH)
(74) Mandataire: Vesterinen, Jussi Tapio

(57) **Abrégé**

La présente invention concerne un procédé de pilotage d'une machine-outil pour usiner une pièce. Le procédé comprend : (a) la détermination (115) de la capacité non utilisée d'au moins un organe de mouvement de la machine-outil ; (b) la détermination (117) des corrections pour ledit organe de mouvement de la machine-outil à partir de la capacité non utilisée ; et (c) la modulation (105) de la dynamique dudit organe de mouvement de la machine-outil à partir des corrections déduites. La solution proposée permet entre autre des accélérations beaucoup plus importante, donc une meilleure dynamique de la machine. La présente invention offre la possibilité de moduler non seulement l'accélération, mais aussi la vitesse d'avance et le jerk.

## Description

### DOMAINE DE L'INVENTION

L'invention se rapporte à un procédé de pilotage d'une machine-outil pour usiner une pièce. Plus précisément le procédé permet de relever la capacité non utilisée des organes de mouvement de la machine et d'en déduire les corrections du programme d'usinage qui permettront une meilleure utilisation de cette capacité instantanée. L'invention se rapporte aussi à un programme d'ordinateur agencé pour exécuter le procédé et à une machine-outil comprenant ce programme d'ordinateur.

### DESCRIPTION DE L'ART ANTERIEUR

Une machine-outil telle qu'une décolleteuse, comprend généralement au moins une broche pour recevoir la pièce à usiner. Celle-ci se présente généralement sous forme d'une barre métallique ou non. Cette ou ces broches sont généralement agencées pour faire tourner la pièce à usiner autour de son ou de leurs axes. L'usinage même est effectué par des outils placés autour de la ou des broches. Le pilotage des machines-outils modernes est généralement contrôlé par une commande numérique.

La décolleteuse est une machine-outil de grande production, c'est-à-dire qu'elle est appelée à répéter plusieurs fois la même pièce. Cette particularité se traduit aussi par la possibilité d'utiliser une architecture de commande numérique différente de celle des commandes numériques traditionnelles. La différence d'architecture réside dans le besoin d'une exécution très rapide d'un même programme ou d'un même ensemble de programmes.

La présente invention se réfère à ce type de commande numérique, qui répond à ce besoin particulier des décolleteuses. L'interpolateur (calculateur de trajectoires) effectue le calcul de l'ensemble des trajectoires avant le début de l'usinage et les résultats de ces calculs sont placés par exemple dans des tables circulaires qui seront ensuite exécutées en continu par les unités de pilotage des axes et des broches. Cette méthode permet d'une part de calculer et d'optimiser les mouvements sans les contraintes temporelles des commandes numériques traditionnelles et d'autre par d'exécuter les mouvements précalculés sans nécessiter de calculs compliqués en temps réel.

Les axes supportant les outils et les broches d'une machine-outil sont dimensionnés pour fournir une puissance instantanée largement supérieure à la puissance qu'ils peuvent fournir de manière continue. Les mouvements spatiaux temporels des trajectoires d'usinage déterminés par un programme d'ordinateur ou par l'interpolateur de la commande numérique ne tiennent pas compte de cette puissance instantanée des organes de la machine et n'exploite par conséquent pas toutes les possibilités de la machine, rallongeant de ce fait la durée d'usinage d'une pièce.

Les machines-outils actuelles ne fonctionnent donc pas d'une manière optimale et ne tiennent pas compte de toutes les capacités de la machine.

### RESUME DE L'INVENTION

L'objet de la présente invention est de repousser les limites des machines actuelles. La présente invention propose donc une solution pour utiliser plus efficacement les machines-outils que jusqu'à maintenant comme expliqué plus en détail plus loin.

A cet effet, l'invention a pour objet un procédé de pilotage d'une machine-outil pour usiner une pièce, le procédé comprend :
● la détermination de la capacité non utilisée d'au moins un organe de mouvement de la machine-outil ;
● la détermination des corrections pour ledit organe de mouvement de la machine-outil à partir de la capacité non utilisée ; et
● la modulation de la dynamique dudit organe de mouvement de la machine-outil à partir des corrections déduites.

La solution proposée possède plusieurs avantages. La solution selon la présente invention est simple et est par conséquent peu coûteuse. Le procédé peut être exécuté par la commande numérique de la machine. La solution proposée offre la possibilité d'effectuer des modulations manuelles (curseur) ou des modulations automatiques (informations de la machine). Le potentiel dynamique inutilisé peut être affiché et l'opérateur peut décider d'influencer manuellement la dynamique du programme d'usinage. La solution offre aussi la possibilité de modulation globale, par axe et par secteur de programme.

La solution proposée permet entre-autre des accélérations beaucoup plus importantes, donc une meilleure dynamique de la machine. La présente invention offre la possibilité de moduler non seulement l'accélération, mais aussi la vitesse d'avance, la vitesse de rotation notamment de la broche et le jerk.

La solution proposée permet donc d'exécuter le même programme d'usinage avec une dynamique (accélérations) soit plus faible (moins de contraintes pour la machine) soit plus importante (temps d'usinage plus court).

L'invention a également pour objet un programme d'ordinateur pour une machine-outil, le programme d'ordinateur étant agencé pour exécuter le procédé ci-dessus lorsque le programme est exécuté sur un ordinateur.

L'invention a également pour objet une machine-outil agencée pour usiner une pièce, la machine-outil comprend des moyens pour :
● déterminer la capacité non utilisée d'au moins un organe de mouvement de la machine-outil ;
● déterminer les corrections pour ledit organe de mouvement de la machine-outil à partir de la capacité non utilisée ; et
● moduler la dynamique dudit organe de mouvement de la machine-outil à partir des corrections déduites.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant le dessin ci-annexé qui représente schématiquement :

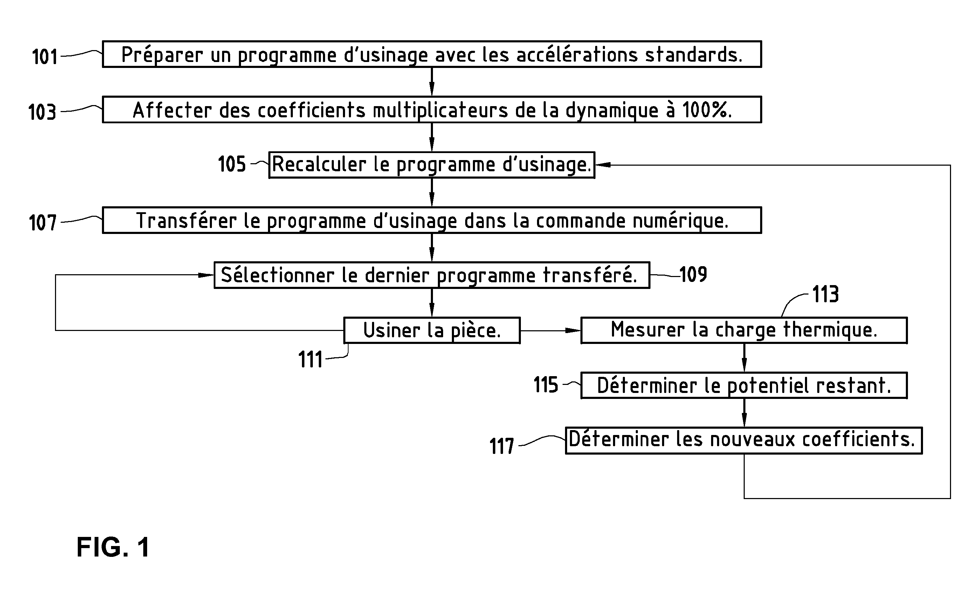

- figure 1 : un organigramme qui illustre le procédé selon la présente invention.

### DESCRIPTION DETAILLEE D'UN MODE DE REALISATION

L'objet de l'invention se compose d'un procédé, d'un programme d'ordinateur et d'un dispositif permettant de relever en temps réel la capacité non utilisée des organes de mouvement de la machine et d'en déduire les corrections qui permettront une meilleure utilisation de leur capacité instantanée. Cet organe de mouvement peut être par exemple un organe de déplacement d'un outil ou une broche de la machine-outil.

Selon la présente invention on peut donc moduler manuellement la dynamique des organes de la machine de manière à permettre d'exécuter le même programme d'usinage avec une dynamique soit plus faible, soit plus importante.

Selon un aspect de la présente invention, la prise en compte du potentiel d'accélération réel de la machine implique de pouvoir moduler les accélérations manuellement pour un usinage plus doux ou plus rapide. Cette modulation signifie que lors du calcul des trajectoires correspondant aux paramètres de la pièce à usiner, tel que le contour, toutes les valeurs d'accélération seront multipliées par un coefficient « y » définissable manuellement. Ce coefficient peut être par exemple entre les limites de 0.1 et 5, i.e. les accélérations sont modulées entre 10% et 500%. On peut aussi varier la dynamique des parties différentes de la pièce d'une manière différente.

La prise en compte du potentiel d'accélération réel de la machine peut aussi impliquer la possibilité de mesurer la charge thermique d'au moins un élément, tel qu'un servo-amplificateur, relié au dit organe de mouvement de la machine pour déterminer automatiquement en fonction de sa capacité restante, la valeur du coefficient multiplicateur qui sera appliqué lors d'un recalcul des trajectoires. La charge thermique des servo-amplificateurs est généralement définie par une valeur dénommée i²t. Cette méthode peut aussi impliquer le fait de réaliser l'usinage d'au moins une pièce avec une valeur connue de coefficient multiplicateur d'une valeur (par exemple 100%) afin de connaître le potentiel d'accélération restant.

La figure 1 est un organigramme qui résume un exemple du procédé décrit ci-dessus. A l'étape 101 on prépare le programme ou les programmes d'usinage avec les accélérations standards. A l'étape 103 on affecte des coefficients multiplicateurs de la dynamique à 100 %, par exemple, c'est-à-dire on utilise un coefficient d'accélération 1 pour au moins un organe de mouvement. Ce coefficient correspond donc à une accélération de 100 % d'un organe concerné. Suite à l'affectation des coefficients, le programme d'ordinateur recalcule le programme d'usinage à l'étape 105.

Après le recalcul du programme d'usinage, ce programme est transféré dans la commande numérique à l'étape 107. A l'étape 109, si une nouvelle pièce (nouveau programme) est disponible, cette nouvelle pièce sera sélectionnée et à l'étape 111 la machine-outil effectue l'usinage de la pièce. Après avoir effectué l'étape 111, on retourne à l'étape 109.

En parallèle avec l'étape 111, le programme d'ordinateur de la machine outil mesure à l'étape 113 la charge thermique des servo-amplificateurs ou moteurs reliés aux organes de mouvement et à l'étape 115 on détermine le potentiel thermique restant de chaque servo-amplificateur. Le potentiel restant est obtenu en soustrayant la charge thermique actuelle de la charge thermique maximale des servo-amplificateurs de la machine-outil. Après la détermination du potentiel restant, la machine-outil détermine à l'étape 117 les nouveaux coefficients d'accélération. Puis la procédure continue à l'étape 105 en recalculant le programme d'usinage. L'usinage d'une pièce est effectué en utilisant un programme d'usinage le plus récent disponible. Par conséquent la dynamique d'au moins un organe de la machine-outil est modulée en utilisant les coefficients déterminés à l'étape 117.

Selon cet exemple, la machine-outil travaille en boucle, c'est-à-dire que le programme est répété jusqu'à ce que le nombre de pièces demandé soit réalisé. Cela implique que la machine continuera d'exécuter des pièces pendant le calcul et le transfert du nouveau programme dans la commande numérique. Ensuite et seulement, lorsque le nouveau programme est disponible dans la commande numérique, elle poursuivra l'usinage des pièces suivantes avec le nouveau programme. En conséquence, le calcul et le transfert du nouveau programme se font en parallèle avec l'usinage.

Selon un aspect de la présente invention, on peut définir un seuil pour la charge thermique. Une charge thermique plus élevée que le seuil engendre une diminution de l'accélération dudit organe de mouvement et une charge thermique plus basse que le seuil engendre une augmentation de l'accélération dudit organe de mouvement. La diminution ou l'augmentation de l'accélération peut être réalisée soit progressivement de manière itérative, soit par calculs en tenant comptes des caractéristiques intrinsèque de l'organe de mouvement telles que les masses, les inerties, les frottements et les rapports d'entraînement.

Selon la présente invention il est possible de moduler la dynamique soit sur la totalité du programme d'usinage ou seulement sur certaines sections du programme d'usinage. Le programme d'ordinateur pour la machine-outil analyse donc sur quelles sections du programme d'usinage la dynamique peut avantageusement être modulée.

La présente méthode est aussi applicable non seulement aux accélérations, mais aussi au jerk, aux vitesses d'avance et aux vitesses de rotation notamment de la broche.

On pourrait aussi envisager plusieurs variations dans les configurations expliquées ci-dessus sans sortir du cadre de la présente invention.

## Revendications

1. Un procédé de pilotage d'une machine-outil pour usiner une pièce, le procédé comprend :
● la détermination (115) de la capacité non utilisée d'au moins un organe de mouvement de la machine-outil ;
● la détermination (117) d'au moins une correction pour ledit organe de mouvement de la machine-outil à partir de la capacité non utilisée ; et
● la modulation (105) de la dynamique dudit organe de mouvement de la machine-outil à partir de la correction déduite.

2. Le procédé selon la revendication 1, dans lequel la capacité non utilisée est relevée en temps réel.

3. Le procédé selon la revendication 1 ou 2, dans lequel la dynamique est au moins l'accélération, la vitesse d'avance, la vitesse de rotation ou le jerk.

4. Le procédé selon l'une quelconque des revendications précédentes, dans lequel ledit organe est un organe de déplacement d'un outil ou une broche de la machine-outil.

5. Le procédé selon l'une quelconque des revendications précédentes, comprenant en plus la détermination (113) de la charge thermique d'au moins un élément relié à l'organe de mouvement et, dans lequel on tient compte de cette charge thermique pour moduler la dynamique de la machine-outil.

6. Le procédé selon la revendication 5, dans lequel l'élément est un servo-amplificateur ou un moteur de la machine-outil.

7. Le procédé selon la revendication 5 ou 6, dans lequel la capacité non utilisée est obtenue en soustrayant la charge thermique déterminée de la charge thermique maximale de cet élément.

8. Le procédé selon l'une quelconque des revendications 5 à 7, dans lequel le procédé comprend en plus un usinage utilisant un coefficient prédéterminé pour la modulation de la dynamique, et dans lequel la charge thermique est mesurée pour ledit élément modulé en utilisant ledit coefficient prédéterminé.

9. Le procédé selon la revendication 8, dans lequel la détermination (117) des corrections pour ledit organe de mouvement de la machine-outil comprend la détermination d'un nouveau coefficient pour la modulation de la dynamique dudit organe de mouvement de la machine-outil à partir de la charge thermique déterminée.

10. Le procédé selon l'une quelconque des revendications précédentes, dans lequel la dynamique de la machine-outil est modulée lors du recalcul des trajectoires correspondantes aux paramètres de la pièce.

11. Le procédé selon l'une quelconque des revendications précédentes, dans lequel la pièce est usinée selon un programme d'usinage et dans lequel la dynamique d'au moins un organe de la machine-outil est modulé soit sur la totalité du programme d'usinage, soit seulement sur une partie du programme d'usinage.

12. Le procédé selon la revendication 11, dans lequel le procédé comprend en plus l'analyse du programme d'usinage pour déterminer quelles parties du programme d'usinage peuvent être dynamiquement modulées.

13. Le procédé selon l'une quelconque des revendications 5 à 9, dans lequel le procédé comprend en plus la définition d'un seuil pour la charge thermique où une charge thermique plus élevée que le seuil engendre une diminution de l'accélération dudit organe de mouvement et une charge thermique plus basse que le seuil engendre une augmentation de l'accélération dudit organe de mouvement.

14. Le procédé selon la revendication 13, dans lequel la diminution ou l'augmentation de l'accélération est réalisée soit progressivement de manière itérative, soit par calculs en tenant comptes des caractéristiques intrinsèque de l'organe de mouvement telles que les masses, les inerties, les frottements et les rapports d'entraînement.

15. Le procédé selon l'une quelconque des revendications précédentes, dans lequel la dynamique est modulée manuellement.

16. Un programme d'ordinateur pour une machine-outil, le programme d'ordinateur étant agencé pour exécuter le procédé selon l'une quelconque des revendications précédentes lorsque le programme est exécuté sur un ordinateur.

17. Une machine-outil pour usiner une pièce, la machine-outil comprend des moyens pour :
● déterminer la capacité non utilisée d'au moins un organe de mouvement de la machine-outil ;
● déterminer les corrections pour ledit organe de mouvement de la machine-outil à partir de la capacité non utilisée; et
● moduler la dynamique dudit organe de mouvement de la machine-outil à partir des corrections déduites.
